(19) Europäisches Patentamt
European Patent Office
Office européen des brevets

(11) EP 0 872 509 B1

(12) # EUROPÄISCHE PATENTSCHRIFT

(45) Veröffentlichungstag und Bekanntmachung des Hinweises auf die Patenterteilung:
**15.12.1999 Patentblatt 1999/50**

(51) Int Cl.6: **C08G 77/442**, C08G 77/388, C08G 77/382

(21) Anmeldenummer: **98106546.9**

(22) Anmeldetag: **09.04.1998**

(54) **Oligo- oder Polyisobutylengruppen aufweisende Organosiliciumverbindungen**

Oligo- or polyisobutylene- groups containing organosilicon compounds

Composés organosiliciques contenant des groupes oligo- ou polyisobutylène

(84) Benannte Vertragsstaaten:
**AT CH DE ES FI FR GB IT LI NL SE**

(30) Priorität: **14.04.1997 DE 19715513**

(43) Veröffentlichungstag der Anmeldung:
**21.10.1998 Patentblatt 1998/43**

(73) Patentinhaber: **Wacker-Chemie GmbH**
**81737 München (DE)**

(72) Erfinder:
- **Dauth, Jochen, Dr.**
  **84489 Burghausen (DE)**
- **Hierstetter, Thomas, Dr.**
  **84489 Burghausen (DE)**
- **Deubzer, Bernward, Dr.**
  **84489 Burghausen (DE)**
- **Gratzl, Petra**
  **84577 Tuessling (DE)**

(74) Vertreter: **Deffner-Lehner, Maria, Dr. et al**
**Wacker-Chemie GmbH,**
**Zentralabteilung PLM,**
**Hanns-Seidel-Platz 4**
**81737 München (DE)**

(56) Entgegenhaltungen:
**EP-A- 0 252 372**
**EP-A- 0 320 259**
**EP-A- 0 737 688**

EP 0 872 509 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Oligo- oder Polyisobutylengruppen aufweisende Organosiliciumverbindungen, ein Verfahren zu ihrer Herstellung, ein Verfahren zu ihrer Equilibrierung und Verfahren zur Beschichtung, wobei diese Verbindungen verwendet werden.

Vielfältig bekannt sind Formulierungen mit den Komponenten Polyorganosiloxane und Polyisobutylen. Beispiele hierzu sind die US 3855174 (Commissariat Energie Atomique, 17.12.74) und die US 4725648 (Toshiba Silicone, 16.02.88).

Aufgabe der Erfindung ist es neue Oligo- oder Polyisobutylengruppen aufweisende Organosiliciumverbindungen bereitzustellen, die in einem einfachen Verfahren unter Verwendung leicht zugänglicher Ausgangsstoffe hergestellt werden können, hydrophob und Detergenzien beständig sind und deren Strukturen gezielt aufgebaut werden können. Dabei sollte kein Übergangsmetallkatalysator, z.B. für eine Hydrosilylierungsreaktion, verwendet werden. Die erfindungsgemäßen Organosiliciumverbindungen sollen auch hydrophil, reaktiv bzw. vernetzbar ausgestattet werden können sowie insbesondere hervorragende Eigenschaften als Poliermittel haben. Die Aufgabe wird durch die Erfindung gelöst.

Gegenstand der Erfindung sind Oligo- oder Polyisobutylengruppen aufweisende Organosiliciumverbindungen mit mindestens einer Einheit der Formel

$$A_aR_bSiX_cO_{4-(a+b+c)/2,} \qquad (I)$$

wobei R gleich oder verschieden ist, einen einwertigen, zweiwertigen oder dreiwertigen nicht substituierten oder substituierten Kohlenwasserstoffrest mit vorzugsweise 1 bis 3600 Kohlenstoffatom(en) je Rest bedeutet, X gleich oder verschieden ist, ein Chloratom oder ein Rest der Formel $-OR^1$ ist, wobei $R^1$ ein Wasserstoffatom oder einen Alkylrest mit vorzugsweise 1 bis 8 Kohlenstoffatom(en) je Rest, der durch ein Ethersauerstoffatom substituiert sein kann, oder einen Rest der Formel

$$-R^2([OCH(CH_3)CH_2]_e[OCH_2CH_2]_f[O(CH_2)_4]_gOR^3)_y \qquad (II)$$

bedeutet, wobei die Reste $([OCH(CH_3)CH_2]_{e'}$ $[OCH_2CH_2]_f$ und $[O(CH_2)_4]_g$ in beliebiger Reihenfolge, gemischt vorkommen können,
wobei $R^2$ einen zweiwertigen oder dreiwertigen, nicht substituierten oder substituierten Kohlenwasserstoffrest vorzugsweise mit 2 bis 50 Kohlenstoffatom(en) je Rest bedeutet, der durch eine oder mehrere Gruppen der Formeln

$$-(C{=}O)-O-,\ -(C{=}O)-NR^3-,\ -NR^3-,\ -O-,\ -S-$$

substituiert ist, wobei $-(C{=}O)-O-$, $-NR^3-$ und $-O-$ besonders bevorzugt ist,
$R^3$ ein Wasserstoffatom oder $R^1$ ist oder einen Rest der Formel $-(C{=}O)-R^1$ bedeutet,
e, f und g jeweils eine ganze Zahl von vorzugsweise 0 - 200, bevorzugt 1- 50 und besonders bevorzugt 5 - 30 sind, mit der Maßgabe, daß die Summe $e + f + g \geq 1$ ist und y 1 oder 2 bedeutet,

a 0, 1 oder 2
b 0, 1, 2 oder 3
c 0, 1, 2 oder 3 und die Summe $a + b + c \leq 4$ ist,

wobei bevorzugte Beispiele für Formel (II):

$$-C-CH_2-(OCH_2CH_2)_z-O-(C{=}O)-CH_2-CH_2-NH-L$$
$$||$$
$$CH-CH_2-(OCH_2CH_2)_z-O-(C{=}O)-CH_2-CH_2-NH-L$$

$$L= -CH_2-CH_2-(OCH_2CH_2)_{100-200}-OCH_3$$

$$-CH(-CH_3)-CH_2-(OCH_2CH_2)_{9-13}-OCH_3$$

$$-CH(-CH_3)-CH_2-(OCH_2CH(-CH_3)_{8-10}-OCH_2CH_2OCH_3$$

$$-CH_2-CH_2-(O(CH_2)_4)_{15-17}-OH \text{ sind,}$$

z Null oder eine Zahl zwischen 1 und 20 ist und
A ein Rest ist, der eine Oligo- oder Polyisobutylengruppe aufweist, mit der Maßgabe, daß pro Molekül mindestens ein Rest der Formel A vorliegt.

Bevorzugt ist A ein Rest der Formel

$$- R^2-[(-C(CH_3)_2-CH_2)_n-R^4]_y \qquad (III),$$

oder

$$-R^2-[(-CH_2-C(CH_3)_2-)_n-R^4]_y \qquad (III')$$

wobei $R^2$ die oben angegebene Bedeutung hat, $R^4$ ein Wasserstoffatom, ein Kohlenwasserstoffrest, oder ein Rest der Formeln $-(C{=}O)-R^1$, $-O-R^1$, $-O-(C{=}O)-R^1$ ist und n eine Zahl von 1 bis 500 ist, y 1 oder 2 ist, mit der Maßgabe, daß pro Molekül mindestens ein Rest der Formel A vorliegt.

Gegenstand der Erfindung ist weiterhin ein Verfahren zur Herstellung von Oligo- oder Polyisobutylengruppen aufweisenden Organosiliciumverbindungen, dadurch gekennzeichnet, daß Organosiliciumverbindung mit mindestens einer Einheiten der Formel

$$E_aR_bSiX_cO_{4-(a+b+c)/2,} \qquad (IV)$$

wobei R, X, a, b und c die oben dafür angegebene Bedeutung haben und E ein Rest der Formeln

$$-R^2-(NR^1-CH_2-CH_2)_d-NR^1{}_2,\ -R^2-SH,\ - R^2-(Z-(C{=}O)-(C-R^5)=CH_2)_y \text{ ist,}$$

wobei $R^2$ und $R^1$ die dafür angegebene Bedeutung haben, Z ein Rest der Formeln -O- oder $NR^3$, d O oder eine ganze Zahl von 1 bis 8, y 1 oder 2 ist und $R^5$ ein Wasserstoffatom oder eine Methylgruppe ist, mit der Maßgabe, daß pro Molekül mindestens eine Einheit der Formel E enthalten ist, mit Oligo- oder Polyisobutylen der Formel

$$H_2N-R_h{}^6-(CH_2-C(CH_3)_2)_n-R^4,\ HS-R_h{}^6-(CH_2-C(CH_3)_2)_n-R^4$$

$$H_2N-R_h{}^6-(- C(CH_3)_2-CH_2-)-{}_nR^4,\ HS-R_h{}^6-(-C(CH_3)_2-CH_2-)_n-R^4$$

$$H_2C=(C-R^5)-(C{=}O)-Z-R_h{}^6-(-C(CH_3)_2-CH_2-)_n-R^4 \qquad (V)$$

$$H_2C=(C-R^5)-(C{=}O)-Z-R_h{}^6-(CH_2-C(CH_3)_2-)_n-R^4$$

wobei $R^4$ die oben angegebene Bedeutung hat; n = eine Zahl von 1 bis 500, $R^5$, Z und n die oben dafür angegebene Bedeutung haben, $R^6$ ein substituierter oder nicht substituierter Kohlenwasserstoffrest mit 1 - 8 Kohlenstoffatomen, der durch eine Gruppe der Formel -(C=O)- unterbrochen sein kann und h 0 oder 1 bedeutet, in Substanz, Lösung oder Emulsion umgesetzt werden.

Beispiele für Reste R sind Alkylreste, wie der Methyl-, Ethyl-, n-Propyl-, iso-Propyl-, 1-n-Butyl-, 2-n-Butyl-, iso-Butyl-, tert. -Butyl-, n-Pentyl-, iso-Pentyl-, neo-Pentyl, tert. Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, Phenylethylrest. Bevorzugt sind der Methylrest, der n-Octylrest, der n-Dodecylrest und der n-Octadecylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Besonders bevorzugte Reste R sind:

$$-(CH_2)_3\text{-}SH,$$

$$-(CH_2)_3\text{-}NH_2,$$

$$-(CH_2)_3\text{-}NH\text{-}CH_2\text{-}CH_2\text{-}NH_2,$$

$$-(CH_2)_3\text{-}NH_3^{+}\ Y^{-}, \text{ wobei Y } Cl^{-}, HSO_3^{-}, HCOO^{-}, CH_3COO^{-}$$

bedeutet,

$$-(CH_2)_3\text{-}NH_3^{+}(Y^{-})\text{-}CH_2\text{-}CH_2\text{-}NH_3^{+}(Y^{-}),$$

$$-(CH_2)_3\text{-}NH\text{-}(C{=}O)\text{-}CH_3$$

$$-(CH_2)_3\text{-}N\text{-}((C{=}O)\text{-}CH_3)\text{-}CH_2\text{-}CH_2\text{-}NH\text{-}(C{=}O)\text{-}CH_3$$

$$\begin{array}{l}-C\text{-}CH_2\text{-}(\text{-}O\text{-}CH_2\text{-}CH_2)_z\text{-}O\text{-}(C{=}O)\text{-}CH{=}CH_2\\ \ \ ||\\ \ \ CH\text{-}CH_2\text{-}(\text{-}O\text{-}CH_2\text{-}CH_2)_z\text{-}O\text{-}(C{=}O)\text{-}CH{=}CH_2\end{array}$$

Beispiele für Alkylreste $R^1$ sind Methyl-, Ethyl-, n-Propyl-, iso-Propyl-, 1-n-Butyl-, 2-n-Butyl-, iso-Butyl-, tert. -Butylreste. Bevorzugt sind der Methyl- und Ethylrest. Beispiele für Alkylreste $R^1$, die durch ein Ethersauerstoffatom substituiert sind, sind der Methoxyethyl- und Ethoxyethylrest.

Bevorzugt ist der Rest $R^1$, ein Wasserstoffatom, eine Methyl-, Ethyl-, Butyl- oder Cyclohexylgruppe.

Beispiele für Reste $R^2$ sind substituierte Alkylreste der Formeln

$$-(CH_2)_3\text{-}[(C_6H_3)\text{-}(OCH_3)]\text{-}O\text{-}(C{=}O)\text{-}CH_2\text{-}CH_2\text{-}NH\text{-},$$

$$-(CH_2)_3-O-(C{=}O)-CH_2-CH_2-NH-,$$

$$-(CH_2)_6-O-(C{=}O)-CH_2-CH_2-NH-,$$

$$-CH{=}CH-CH_2-(-O-CH_2-CH_2)_z-O-(C{=}O)-CH_2-CH_2-NH-$$

$$-(CH_2)_3-O-CH_2-CH(-OH)-CH_2-O-(C{=}O)-CH_2-CH_2-NH-$$

$$-(CH_2)_3-O-CH_2-CH(-CH_2-OH)-O-(C{=}O)-CH_2-CH_2-NH-$$

$$-(CH_2)_3-O-CH_2-CH(-CH_2-O-(C{=}O)-CH_2-CH_2-NH-)-O-(C{=}O)-CH_2-CH_2-NH-$$

$$-C-CH_2-(-OCH_2CH_2-)_z-O-(C{=}O)-CH_2-CH_2-NH-$$
$$||$$
$$CH-CH_2-(-OCH_2CH_2-)_z-O-(C{=}O)-CH_2-CH_2-NH-$$

$$-(CH_2)_3-NH-CH_2-CH_2-(C{=}O)-O-$$

$$-(CH_2)_3-NH-CH_2-CH_2-NH-CH_2-CH_2-(C{=}O)-O-$$

$$-C-CH_2-(-OCH_2CH_2-)_z-O-(C{=}O)-CH_2-CH_2-S-$$
$$||$$
$$CH-CH_2-(-OCH_2CH_2-)_z-O-(C{=}O)-CH_2-CH_2-S-$$

Bevorzugt ist n 1 bis 100, besonders bevorzugt 5 bis 50. Bevorzugt ist z 0 bis 15, besonders bevorzugt 1 bis 10.

Bevorzugte Reste für $R^2$ sind solche der Formel

$$-C-CH_2-(-OCH_2CH_2-)_{2-3}-O-(C{=}O)-CH_2-CH_2-NH-$$
$$||$$
$$-CH-CH_2-(-OCH_2CH_2-)_{2-3}-O-(C{=}O)-CH_2-CH_2-NH-$$

Bevorzugt ist der Rest $R^3$, ein Wasserstoffatom, eine Methyl- oder Butylgruppe.

Bevorzugt als Oligo- oder Polyisobutylengruppen aufweisende Organosiliciumverbindungen sind solche der Formel

$$A_gR_{3-g}SiO(SiR_2O)_o(SiRAO)_mSiR_{3-g}A_g \qquad (VI)$$

wobei A und R die oben dafür angegebene Bedeutung haben, g 0,1 oder 2, m und o 0 oder eine ganze Zahl von 1 bis 1000 ist, mit der Maßgabe, daß mindestens ein Rest A terminal oder seitenständig je Molekül enthalten ist. Die Reste $(SiR_2O)_o$ und $(SiRAO)_m$ können in beliebiger Reihenfolge, gemischt vorkommen.

Die erfindungsgemäßen Organosiliciumverbindungen besitzen vorzugsweise ein durchschnittliches Molekulargewicht von 500 bis 1 000 000 g/mol, bevorzugt 5 000 bis 150 000 g/mol und vorzugsweise eine Viskosität von 10 bis 1 000 000 $mm^2 \cdot s$-1 bei 25°C, bevorzugt 20 bis 100 000 $mm^2 \cdot s$-1 bei 25°C.

Die erfindungsgemäßen Organosiliciumverbindungen können auch wachsartig oder fest sein.

Vorzugsweise sind die bei den erfindungsgemäßen Verfahren eingesetzten Organosiliciumverbindungen solche der Formel

$$E_gR_{3-g}SiO(SiR_2O)_o(SiREO)_mSiR_{3-g}E_g \qquad (VII)$$

wobei R, E, g, o und m die oben dafür angegebene Bedeutung haben und wobei $(SiR_2O)_o$ und $(SiREO)_m$ in beliebiger Reihenfolge, gemischt vorkommen können.

Bei dem erfindungsgemäßen Verfahren können aus der Literatur bekannte Verbindungen, die Michaelreaktion ähnliche Reaktionen katalysieren, eingesetzt werden.

Beispiele sind Eisessig, Zinn(IV)chlorid, Natriummethylat und Alkaliamide, die in Mengen von 0,1 bis 2 Gew. % des Gesamtgewichts der Ausgangsstoffe eingesetzt werden.

Des weiteren können Radikalinitiatoren bei der Umsetzung von Mercaptanen, wie Azoverbindungen und/oder Peroxoverbindungen zwischen 0,1 - 5 Gew.-% als Katalysatoren zugesetzt werden.

Bei dem erfindungsgemäßen Verfahren werden pro Mol des Restes E der Organosiliciumverbindung (IV) vorzugsweise 0,001 - 10 Mol Verbindung der Formel (V), bevorzugt 0,01 - 3 Mol und besonders bevorzugt 0,1 - 2 Mol verwendet.

Bei dem erfindungsgemäßen Verfahren können nicht umgesetzte Reste E der Organosiliciumverbindung (IV) weiter mit alkoxylierten Aminen oder Acrylaten zur Hydrophilierung der erfindungsgemäßen Organosiliciumverbindungen umgesetzt werden.

Bei dem erfindungsgemäßen Verfahren können organische Lösungsmittel und Wasser oder Mischungen aus beiden mit verwendet werden. Beispiele für organische Lösungsmittel sind Toluol, Xylol, Tetrahydrofuran (THF), n-Butylacetat, Isopropanol und Dimethoxyethan.

Vorzugsweise wird mit verwendetes organisches Lösungsmittel nach der Reaktion entfernt.

Das erfindungsgemäße Verfahren wird vorzugsweise beim Druck der umgebenden Atmosphäre, also etwa bei 1020 hPa (abs.) durchgeführt. Sie können aber auch bei höheren oder niedrigeren Drücken durchgeführt werden. Ferner wird das erfindungsgemäße Verfahren vorzugsweise bei einer Temperatur von 25 °C bis 150 °C, bevorzugt 25 °C bis 120 °C, besonders bevorzugt 25 °C bis 100 °C, durchgeführt.

Die Umsetzung von acrylierten Organosiliciumverbindungen mit monoaminiertem Polyisobutylen ist bevorzugt.

Wird das monoaminierte Oligo- oder Polyisobutylen unterstöchiometrisch auf die (Meth)acrylatgruppen eingesetzt, können die erfindungsgemäßen Organosiliciumverbindungen über die verbleibenden (Meth)acrylatgruppen radikalisch oder über eine Hydrosilylierung vernetzt werden.

Verbleibende Amingruppen können nach der Umsetzung acyliert oder neutralisiert werden.

Die nach dem erfindungsgemäßen Verfahren erhaltenen Oligo- oder Polyisobutylengruppen aufweisenden Organopolysiloxane können mit Organopolysiloxanen, ausgewählt aus der Gruppe bestehend aus linearen, endständigen Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten, equilibriert werden.

Vorzugsweise werden als lineare, endständige Triorganosiloxy-gruppen aufweisende Organopolysiloxane solche der Formel

$$R_3SiO(SiR_2O)_rSiR_3,$$

wobei R die oben dafür angegebene Bedeutung hat und r 0 oder eine ganze Zahl im Wert von 1 bis 1500 ist, als lineare, endständige Hydroxylgruppen aufweisende Organopolysiloxane solche der Formel

$$HO(SiR_2O)_sH,$$

wobei R die oben dafür angegebene Bedeutung hat und s eine ganze Zahl im Wert von 1 bis 1500 ist, als cyclische Organopolysiloxane solche der Formel

$$(R_2SiO)_t,$$

wobei R die oben dafür angegebene Bedeutung hat und t eine ganze Zahl von 3 bis 12 ist, und als Mischpolymerisate solche aus Einheiten der Formel

$$R_2SiO \text{ und } RSiO_{3/2},$$

wobei R die oben dafür angegebene Bedeutung hat, eingesetzt.

Die Mengenverhältnisse der bei der gegebenenfalls durchgeführten Equilibrierung eingesetzten Organopolysiloxane und Oligo- oder Polyisobutylengruppen aufweisenden Organopolysiloxane werden lediglich durch den gewünschten Anteil der Oligo- oder Polyisobutylengruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden saure oder basische Katalysatoren, welche die Equilibrierung fördern, eingesetzt. Beispiele für saure Katalysatoren sind Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (= Teile je Million), insbesondere 50 bis 200 Gew.-ppm, jeweils bezogen auf das Gesamtgewicht der eingesetzten Organosiliciumverbindungen, verwendet. Beispiele für basische Katalysatoren sind Benzyltrimethylammoniumhydroxid, Tetramethylammoniumhydroxid, Alkalihydroxide, Erdalkalihydroxide in methanolischer Lösung, Phosphoniumhydroxide und Silanolate. Bevorzugt sind Alkalihydroxide, welche in Mengen von 50 bis 10000 Gew.-ppm (Teile je Million), insbesondere 500 bis 2000 ppm, jeweils bezogen auf das Gesamtgewicht der eingesetzten Organosiliciumverbindungen, verwendet werden.

Die gegebenenfalls durchgeführte Equilibrierung wird vorzugsweise bei 80°C bis 150 °C und beim Druck der umgebenden Atmosphäre, also etwa bei 1020 hPa (abs.), durchgeführt. Falls erwünscht, können aber auch höhere oder niedrigere Drücke angewendet werden. Das Equilibrieren wird vorzugsweise in 5 bis 20 Gew.-%, bezogen auf das Gesamtgewicht der jeweils eingesetzten Organosiliciumverbindungen, in mit Wasser nicht mischbarem Lösungsmittel, wie Toluol, durchgeführt.

Vor dem Aufarbeiten des bei dem Equilibrieren erhaltenen Gemisches kann der Katalysator unwirksam gemacht werden.

Die erfindungsgemäßen Oligo- oder Polyisobutylengruppen aufweisenden Organosiliciumverbindungen zeichnen sich durch ihre einfache Darstellungsweise und die Möglichkeit der gezielten Abstufung der Hydrophobie aus. Werden die monoaminierten Polyisobutylene unterstöchiometrisch auf die Acrylatgruppen eingesetzt, verbleiben im Siliconöl freie Acrylatgruppen, die dann in einem zweiten Schritt mit monoaminierten Polyoxyalkylenen umgesetzt werden können.

Durch das Verhältnis von Polyisobutylenen zu Polyoxyalkylenen entstehen amphiphile Blockcopolymere mit einer exakt abstufbaren Hydrophilie bzw. Hydrophobie (s. Beispiel 6). Neben der Hydrophobie besitzen die erfindungsgemäßen Copolymere einen guten Weichgriff und eine geringe Vergilbungsneigung. Des weiteren zeichnen sie sich durch eine Detergenzienbeständigkeit aus.

Die genannten erfindungsgemäßen Organosiliciumverbindungen dienen vorzugsweise der Behandlung von textilen Flächengebilden, wie z. B. Geweben, Maschenwaren oder Vliesen. Die Erfindung betrifft ferner Textilfaserpräparation und Lederbehandlung. Weiterhin finden die erfindungsgemäßen Verbindungen Einsatz in der Kosmetik-, Pflegemittel-, Polish-, Lack- und Bauindustrie. Ferner dienen sie der Verträglichkeitsvermittlung von Organosiliciumverbindungen und organischen Kautschuken. Des weiteren dienen die erfindungsgemäßen Verbindungen als Additive für Haarsprays, als Fadengleitmittel, Gewebebeschichtungen und Poliermittel, vorzugsweise für Herde.

**Beispiel 1**

13 g ($2{,}8 \cdot 10^{-2}$ mol C=C) eines Diacrylatgruppen endterminierten Polydimethylsiloxanes der mittleren Kettenlänge 13 mit einer Jodzahl von 54,5 g Jod auf 100 g öl und einer Viskosität von 82 $mm^2/s$ bei 25°C werden mit 86,7 g ($2{,}8 \cdot 10^{-2}$ mol $NH_2$) einer 50 Gew.-%igen Lösung eines monoaminierten Polyisobutylens der mittleren Kettenlänge 17 in einem $C_{13}$-Paraffin (KEROKOM PIBA; Fa. BASF) mit einer Aminzahl von 0,322 mmol Amin/g Lösung zwei Stunden bei 100°C gerührt.
Nach der Filtration wird die Reaktionsmischung im Hochvakuum (1 mbar) bei 120°C bis zur Gewichtskonstanz eingeengt. Man erhält 54,95 g (97,5% d.Th.) (d.Th = der Theorie)) eines klaren, gelben Öles der Viskosität 30 700 $mm^2/s$ bei 25°C.

**Beispiel 2**

40 g ($1{,}89 \cdot 10^{-2}$ mol C=C) eines Diacrylatgruppen endterminierten Polydimethylsiloxanes der mittleren Kettenlänge 100 mit einer Jodzahl von 12 g Jod auf 100 g Öl und einer Viskosität von 421 $mm^2/s$ bei 25°C werden mit 58,7g ($1{,}89 \cdot 10^{-2}$ mol $NH_2$) einer 50 Gew.-%igen Lösung eines monoaminierten Polyisobutylens der mittleren Kettenlänge 17 in einem $C_{13}$-Paraffin (KEROKOM PIBA, Fa. BASF) mit einer Aminzahl von 0,322 mmol Amin/g Lösung und 40 g (0,434 mol) Toluol 4,5 Stunden bei 100°C gerührt.
Nach der Filtration wird die Reaktionsmischung im Hochvakuum (1 mbar) bei 120°C bis zur Gewichtskonstanz eingeengt. Man erhält 67,8 g (97,8% d.Th.) eines farblosen, transluzenten Öles der Viskosität 25 000 $mm^2/s$ bei 25°C (Erfindung 1).

**Beispiel 3**

40 g ($1{,}56 \cdot 10^{-2}$ mol C=C) eines Polydimethylsiloxanes der mittleren Kettenlänge 180 mit im Durchschnitt acht seitenständigen Acrylatgruppen pro Molekül mit einer Jodzahl von 9,9 g Jod auf 100 g Öl und einer Viskosität von 594 $mm^2/s$ bei 25°C werden mit 48,45 g ($1{,}56 \cdot 10^{-2}$ mol $NH_2$) einer 50 Gew.-%igen Lösung eines monoaminierten Polyisobutylens der mittleren Kettenlänge 17 in einem $C_{13}$-Paraffin (KEROKOM PIBA, Fa. BASF) mit einer Aminzahl von 0,322 mol Amin/g Lösung und 20 g (0,217 mol) Toluol 4 Stunden bei 100°C gerührt.
Nach der Filtration wird die Reaktionsmischung im Hochvakuum (1 mbar) bei 120°C bis zur Gewichtskonstanz eingeengt. Man erhält 62,8 g (97,8% d.Th.) eines farblosen, klaren Öles der Viskosität 38 600 $mm^2/S$ bei 25°C.

**Beispiel 4**

Beispiel 1 wird, wie oben beschrieben, wiederholt, nur daß statt 86,74 g 43,38 g KEROKOM PIBA (Fa. BASF) eingesetzt werden. Man erhält 30,77 g (87% d.Th.) eines klaren, gelben Öles der Viskosität 4 900 $mm^2/s$ bei 25°C (Copo 1).

**Beispiel 5**

10 g Copo 1 werden mit 3 Gew.-% 2,2'-Azoisobutyronitril versetzt und 4 Stunden bei 100°C temperiert. Man erhält einen vollständig vernetzten, gelben Kautschuk.

**Beispiel 6**

40 g des in Beispiel 2 beschriebenen Polydimethylsiloxanes mit Acrylatgruppen werden mit 29,37 g ($9{,}46 \cdot 10^{-3}$ mol $NH_2$) einer 50 Gew.-%igen Lösung eines monoaminierten Polyisobutylens der mittleren Kettenlänge 17 in einem $C_{13}$-Paraffin (KEROKOM PIBA, Fa. BASF) mit einer Aminzahl von 0,322 mmol Amin/g Lösung und 5,95 g ($9{,}46 \cdot 10^{-3}$ mol Amin) eines monoaminierten, methylendgestopperten Polyethylenoxides der mittleren Kettenlänge 13 mit einer Aminzahl von 1,59 mmol Amin/g Oligomer und 20 g (0,217 mol) Toluol 4 Stunden bei 100°C gerührt.
Nach der Filtration wird die Reaktionsmischung im Hochvakuum (1 mbar) bei 120°C bis zur Gewichtskonstanz eingeengt. Man erhält 67,8 g (97,8% d.Th.) eines farblosen, transluzenten Öles der Viskosität 2 500 $mm^2/S$ bei 25°C.

**Beispiel 7:**

Beispiel 1 wird, wie oben beschrieben, wiederholt, nur daß vor der Filtration 3,2 g ($3{,}1 \cdot 10^{-2}$ mol) Essigsäureanhydrid zugegeben werden und die Reaktionszeit um eine Stunde verlängert wird. Nach der Aufarbeitung erhält man 55,3 g (96% d.Th.) eines klaren, bräunlichen Öles der Viskosität 25200 $mm^2/s$ bei 25°C.

**Beispiel 8:**

Vergleich erfindungsgemäße Organosiliciumverbindung zum Stand der Technik in der Anwendung als Poliermittel.

Auf eine leicht verschmutzte Dekorglaskeramikplatte mit den Abmessungen 25 cm x 25 cm wurden je 1 g einer 3 Gew.-%eigen Lösung von Erfindung 1 (Beispiel 2) und eines endgestopperten Siliconöles (Vergleich 2) das aus Trimethylsiloxy-, Dimethylsiloxy- und Aminoethylaminopropylmethylsiloxy-Einheiten aufgebaut ist, der Viskosität 1000 $mm^2/s$ bei 25°C mit seitenständigen Amingruppen (0,58 mmol Amingruppen/g) in Benzin aufgetragen und gleichmäßig verteilt. Anschließend wurde die Platte mit einem feuchten Haushaltstuch so lange poliert, bis die Oberfläche streifenfrei erscheint.
Beurteilt wurde an dieser Stelle die Reinigungswirkung und die Griffestigkeit des Schutzfilms:

| | |
|---|---|
| Erfindung 1 Beispiel 2) | gut |
| Vergleich 2 | mittel |

Anschließend wurde zur Überprüfung der Schutzwirkung die Oberfläche mit einer ca. 3 mm hohen Schicht Zucker bestreut und bis zur völligen Karamelisierung bzw. Carbonisierung des Zuckers aufgeheizt. Nach dem Erkalten wurde die Haftung des karamelisierten Zuckers, die Leichtigkeit und Vollständigkeit des Ablösens von der Oberfläche sowie die Oberflächenbeschaffenheit in Bezug auf Beschädigungen (Schollenbrüche) beurteilt.

| Beurteilungskriterien | Ablösen | Schollenbrüche |
|---|---|---|
| Erfindung 1 (Beispiel 2) | gut | wenige |
| Vergleich 2 | mittel | viele |

## Patentansprüche

1. Oligo- oder Polyisobutylengruppen aufweisende Organosiliciumverbindungen mit mindestens einer Einheit der Formel

$$A_aR_bSiX_cO_{4-(a+b+c)/2}, \qquad (I)$$

wobei R gleich oder verschieden ist, einen einwertigen, zweiwertigen oder dreiwertigen nicht substituierten oder substituierten Kohlenwasserstoffrest bedeutet, X gleich oder verschieden ist, ein Chloratom oder ein Rest der Formel $-OR^1$ ist, wobei $R^1$ ein Wasserstoffatom oder einen Alkylrest, der durch ein Ethersauerstoffatom substituiert sein kann, oder einen Rest der Formel

$$-R^2-([OCH(CH_3)CH_2]_e[OCH_2CH_2]_f[O(CH_2)_4]_gOR^3)_y \qquad (II)$$

bedeutet, wobei $R^2$ einen zweiwertigen oder dreiwertigen, nicht substituierten oder substituierten Kohlenwasserstoffrest bedeutet, der durch eine oder mehrere Gruppen der Formeln

$$-(C{=}O)-O-,\ -(C{=}O)-NR^3-,\ -NR^3-,\ -O-,\ -S-$$

substituiert ist,

$R^3$ ein Wasserstoffatom oder $R^1$ ist oder einen Rest der Formel

$$-(C{=}O)-R^1$$

bedeutet,

e, f und g jeweils eine ganze Zahl von 0 - 200 sind, mit der Maßgabe, daß die Summe $e + f + g \geq 1$ ist und y 1 oder 2 bedeutet,

a 0, 1 oder 2
b 0, 1, 2 oder 3
c 0, 1, 2 oder 3 und die Summe $a + b + c \leq 4$ ist

und

A ein Rest ist, der eine Oligo- oder Polyisobutylengruppe aufweist, mit der Maßgabe, daß pro Molekül mindestens ein Rest der Formel A vorliegt.

**2.** Oligo- oder Polyisobutylengruppen aufweisende Organosiliciumverbindungen nach Anspruch 1, dadurch gekennzeichnet, daß

A Reste der Formel

$$-R^2- [(-C(CH_3)_2-CH_2)_n-R^4]_y \qquad (III),$$

oder

$$-R^2-[(-CH_2-C(CH_3)_2-)_n-R^4]_y \qquad (III')$$

sind, wobei $R^2$ die oben genannte Bedeutung hat, $R^4$ ein Wasserstoffatom, ein Kohlenwasserstoffrest, oder ein Rest der Formeln $-(C{=}O)-R^1$, $-O-R^1$, $-O-(C{=}O)-R^1$ ist und n eine Zahl von 1 bis 500 ist, y die oben genannte Bedeutung hat, mit der Maßgabe, daß pro Molekül mindestens ein Rest der Formel A vorliegt.

**3.** Verfahren zur Herstellung von Oligo- oder Polyisobutylengruppen aufweisenden Organosiliciumverbindungen, dadurch gekennzeichnet, daß Organosiliciumverbindung mit mindestens einer Einheiten der Formel

$$E_aR_bSiX_cO_{4-(a+b+c)/2}, \qquad (IV)$$

wobei R, X, a, b und c die oben dafür angegebene Bedeutung haben und E ein Rest der Formeln

$$-R^2-(NR^1-CH_2-CH_2)_d-NR^1_2,\ -R^2-SH,\ -R^2-(Z-(C{=}O)-(C-R^5){=}CH_2)_y$$

ist,

wobei $R^2$ und $R^1$ die dafür angegebene Bedeutung haben, Z ein Rest der Formeln -O- oder $NR^3$, d O oder eine ganze Zahl von 1 bis 8, y die oben angegeben Bedeutung hat und $R^5$ ein Wasserstoffatom oder eine Methylgruppe ist, mit der Maßgabe, daß pro Molekül mindestens eine Einheit der Formel E enthalten ist, mit Oligo- oder Polyisobutylen der Formel

$$H_2N-R_h^6-(-C(CH_3)_2-CH_2-)_nR^4,\ HS-R_h^6-(-C(CH_3)_2-CH_2-)_nR^4$$

$$H_2C{=}(C-R^5)-(C{=}O)-Z-R_h^6-(-C(CH_3)_2-CH_2-)_nR^4 \qquad (V)$$

$$H_2N-R_h^6-(CH_2-C(CH_3)_2)_n-R^4,\ HS-R_h^6-(CH_2-C(CH_3)_2)_n-R^4$$

$$H_2C{=}(C\text{-}R^5)\text{-}(C{=}O)\text{-}Z\text{-}R_h^6\text{-}(CH_2\text{-}C(CH_3)_2\text{-})_n\text{-}R^4$$

wobei $R^4$, $R^5$, Z und n die oben dafür angegebene Bedeutung haben, $R^6$ einen Kohlenwasserstoffrest bedeutet, der substituiert oder nicht substituiert ist, der durch eine Gruppe der Formel -(C=O)- unterbrochen sein kann und h 0 oder 1 bedeutet, in Substanz, Lösung oder Emulsion umgesetzt werden.

**4.** Verfahren nach Anspruch 3, dadurch gekennzeichnet, daß die Oligo- oder Polyisobutylengruppen aufweisenden Organosiliciumverbindungen, über verbleibende (Meth)acrylatgruppen radikalisch, mittels Michael-Addition ähnlichen Reaktionen oder über eine Hydrosilylierungsreaktion vernetzt werden können.

**5.** Verfahren zur Equilibrierung der Oligo- oder Polyisobutylengruppen aufweisenden Organosiliciumverbindungen nach Anspruch 1 oder 2 oder hergestellt nach Anspruch 3 oder Anspruch 4, dadurch gekennzeichnet, daß sie mit Organopolysiloxanen ausgewählt aus der Gruppe bestehend aus linearen, endständigen Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten equilibriert werden.

**6.** Verfahren zur Beschichtung, dadurch gekennzeichnet, daß die Oligo- oder Polyisobutylengruppen aufweisenden Organosiliciumverbindungen nach Anspruch 1 oder 2 oder hergestellt nach Anspruch 3, 4 oder 5 als Beschichtung aufgebracht werden.

## Claims

**1.** Organosilicon compounds comprising oligoisobutylene or polyisobutylene groups and comprising at least one unit of the formula

$$A_aR_bSiX_cO_{4-(a+b+c)/2}, \qquad (I)$$

where R are identical or different and are each a monovalent, divalent or trivalent unsubstituted or substituted hydrocarbon radical, X are identical or different and are each a chlorine atom or a radical of the formula $-OR^1$, where $R^1$ is a hydrogen atom or an alkyl radical which may be substituted by an ether oxygen atom, or a radical of the formula

$$-R^2([OCH(CH_3)CH_2]_e[OCH_2CH_2]_f[O(CH_2)_4]_gOR^3)_y \qquad (II)$$

where $R^2$ is a divalent or trivalent, unsubstituted or substituted hydrocarbon radical which is substituted by one or more groups of the formulae

$$-(C{=}O)\text{-}O\text{-},\ -(C{=}O)\text{-}NR^3\text{-},\ -NR^3\text{-},\ -O\text{-},\ -S\text{-},$$

$R^3$ is a hydrogen atom or $R^1$ or a radical of the formula

$$-(C{=}O)\text{-}R^1,$$

e, f and g are each an integer of 0 - 200, with the proviso that the sum $e + f + g \geq 1$ and y is 1 or 2,
a is 0, 1 or 2,
b is 0, 1, 2 or 3,
c is 0, 1, 2 or 3 and the sum $a + b + c \leq 4$, and
A is a radical which comprises an oligoisobutylene or polyisobutylene group, with the proviso that at least one radical of the formula A is present per molecule.

2. Organosilicon compounds comprising oligoisobutylene or polyisobutylene groups according to Claim 1, characterized in that
A are radicals of the formula

$$-R^2-[(-C(CH_3)_2-CH_2)_n-R^4]_y \qquad (III)$$

or

$$-R^2-[(-CH_2-C(CH_3)_2-)_n-R^4]_y \qquad (III')$$

where $R^2$ is as defined above, $R^4$ is a hydrogen atom, a hydrocarbon radical or a radical of the formula -(C=O)-$R^1$, -O-$R^1$, -O-(C=O)-$R^1$ and n is a number from 1 to 500, y is as defined above, with the proviso that at least one radical of the formula A is present per molecule.

3. Process for preparing organosilicon compounds comprising oligoisobutylene or polyisobutylene groups, characterized in that an organosilicon compound comprising at least one unit of the formula

$$E_aR_bSiX_cO_{4-(a+b+c)/2}, \qquad (IV)$$

where R, X, a, b and c are as defined above and E is a radical of the formulae

$$-R^2-(NR^1-CH_2-CH_2)_d-NR^1{}_2,\ -R^2-SH,\ -R^2-(Z-(C=O)-(C-R^5)=CH_2)_y,$$

where $R^2$ and $R^1$ are as defined above, Z is a radical of the formula -O- or $NR^3$, d is 0 or an integer from 1 to 8, y is as defined above and $R^5$ is a hydrogen atom or a methyl group, with the proviso that at least one unit of the formula E is present per molecule, are [sic] reacted with oligoisobutylene or polyisobutylene of the formula

$$H_2N-R_h^6-(-C(CH_3)_2\ -CH_2-)_n-R^4,\ HS-R_h^6-(-C(CH_3)_2-\ CH_2-)_n-R^4$$

$$H_2C=(C-R^5)-(C=O)-Z-R_h^6-(-C(CH_3)_2-CH_2-)_n-R^4 \qquad (V)$$

$$H_2N-R_h^6-(-CH_2-C(CH_3)_2)_n-R^4,\ HS-R_h^6-(-CH_2-C(CH_3)_2)_n-R^4$$

$$H_2C=(C-R^5)-(C=O)-Z-R_h^6-(-CH_2-C(CH_3)_2)_n-R^4,$$

where $R^4$, $R^5$, Z and n are as defined above, $R^6$ is a hydrocarbon radical which is substituted or unsubstituted and may be interrupted by a group of the formula -(C=O)- and h is 0 or 1, in bulk, solution or emulsion.

4. Process according to Claim 3, characterized in that the organosilicon compounds comprising oligoisobutylene or polyisobutylene groups can be crosslinked via remaining (meth)acrylate groups by a free-radical mechanism, by means of reactions similar to the Michael addition or via a hydrosilylation reaction.

5. Process for equilibrating organosilicon compounds comprising oligoisobutylene or polyisobutylene groups according to Claim 1 or 2 or prepared according to Claim 3 or Claim 4, characterized in that they are equilibrated with organopolysiloxanes selected from the group consisting of linear organopolysiloxanes having terminal triorganosiloxy groups, linear organopolysiloxanes having terminal hydroxyl groups, cyclic organopolysiloxanes and copolymers of diorganosiloxane and monoorganosiloxane units.

6. Coating process characterized in that the organosilicon compounds comprising oligoisobutylene or polyisobutylene

groups according to Claim 1 or 2 or prepared according to Claim 3, 4 or 5 are applied as a coating.

**Revendications**

1. Composés organosiliciés renfermant des groupes oligo-isobutylène ou polyisobutylène, ayant au moins un motif de formule

$$A_aR_bSiX_cO_{4-(a+b+c)/2}, \quad (I)$$

dans laquelle R est identique ou différent et représente un radical hydrocarboné monovalent, divalent, ou trivalent, non substitué ou substitué, X est identique ou différent et représente un atome de chlore ou un radical de formule $-OR^1$, dans laquelle $R^1$ représente un atome d'hydrogène ou un radical alkyle qui peut être substitué par un atome d'oxygène d'éther, ou un radical de formule

$$-R^2-([OCH(CH_3)CH_2]_e[OCH_2CH_2]_f[O(CH_2)_4]_gOR^3)_y \quad (II)$$

dans laquelle $R^2$ représente un radical hydrocarboné divalent ou trivalent, non substitué ou substitué, qui est substitué par un ou plusieurs groupes de formules

$$-(C{=}O)-O-, -(C{=}O)-NR^3-, -NR^3-, -O-, -S-,$$

$R^3$ représente un atome d'hydrogène ou $R^1$ ou un radical de formule

$$-(C{=}O)-R^1,$$

e, f et g sont chacun un entier de 0 à 200, à condition que la somme de $e + f + g \geq 1$, et y vaut 1 ou 2,
a vaut 0, 1 ou 2,
b vaut 0, 1, 2 ou 3,
c vaut 0, 1, 2 ou 3 et la somme $a + b + c$ est $\leq 4$, et
A est un radical qui renferme un groupe oligo-isobutylène ou polyisobutylène, à condition qu'au moins un radical de formule A soit présent par molécule.

2. Composés organosiliciés renfermant des groupes oligo-isobutylène ou polyisobutylène selon la revendication 1, caractérisés en ce que les A sont des radicaux de formule

$$-R^2-[(-C(CH_3)_2-CH_2)_n-R^4]_y \quad (III),$$

ou

$$-R^2-[(-CH_2-C(CH_3)_2-)_n-R^4]_y] \quad (III'),$$

où $R^2$ est tel que défini ci-dessus, $R^4$ est un atome d'hydrogène, un radical hydrocarboné ou un radical de formules $-(C{=}O)-R^1$, $-O-R^1$, $-O-(C{=}O)-R^1$, et n est un entier de 1 à 500, y est tel que défini ci-dessus, à condition qu'au moins un radical de formule A soit présent par molécule.

3. Procédé de préparation de composés organosiliciés renfermant des groupes oligo-isobutylène ou polyisobutylène, caractérisé en ce qu'un composé organosilicié ayant au moins un motif de formule

$$E_aR_bSiX_cO_{4-(a+b+c)/2}, \quad (IV)$$

dans laquelle R, X, a, b et c sont tels que définis ci-dessus et E est un radical de formules

$$-R^2-(NR^1-CH_2-CH_{2=)d}^{-}NR_2^1, -R^2-SH, -R^2-(Z-(C=O)-(C-R^5)=CH_2)_y,$$

dans lesquelles $R^2$ et $R^1$ sont tels que définis ci-dessus, Z est un radical de formules -O- ou $NR^3$, d vaut 0 ou est un entier de 1 à 8, y est tel que défini ci-dessus et $R^5$ est un atome d'hydrogène ou un groupe méthyle, à condition qu'au moins un motif de formule E soit présent par molécule, est mis à réagir, en masse, en solution ou en émulsion, avec un oligo-isobutylène ou un polyisobutylène de formules

$$H_2N-R_h^6-(-C(CH_3)_2-CH_2-)-_nR^4, HS-R_h^6-(-C(CH_3)_2-CH_2-)-_nR^4$$

$$H_2C=(C-R^5)-(C=O)-Z-R_h^6-(-C(CH_3)_2-CH_2-)-_nR^4 \quad (V)$$

$$H_2N-R_h^6-(CH_2-C(CH_3)_2)_n-R4, HS-R_h^6- (CH_2-C(CH_3)_2)_n-R^4$$

$$H_2C=(C-R^5)-(C=O)-Z-R_h^6-(CH_2-C(CH_3)_2-)_n-R^4$$

dans lesquelles $R^4$, $R^5$, Z et n sont tels que définis ci-dessus, $R^6$ représente un radical hydrocarboné qui est substitué ou non substitué et peut être interrompu par un groupe de formule -(C=O)-, et h vaut 0 ou 1.

**4.** Procédé selon la revendication 3, caractérisé en ce que les composés organosiliciés renfermant des groupes oligo-isobutylène ou polyisobutylène peuvent être réticulés par voie radicalaire par l'intermédiaire de groupes (méth)acrylate restant, au moyen de réactions similaires à l'addition de Michael ou par l'intermédiaire d'une réaction d'hydrosilylation.

**5.** Procédé d'équilibrage des composés organosiliciés renfermant des groupes oligo-isobutylène ou polyisobutylène selon la revendication 1 ou 2 ou préparés selon la revendication 3 ou la revendication 4, caractérisé en ce qu'ils sont équilibrés avec des organopolysiloxanes choisis parmi le groupe constitué d'organopolysiloxanes linéaires renfermant des groupes triorganosiloxy terminaux, d'organopolysiloxanes linéaires renfermant des groupes hydroxy terminaux, d'organopolysiloxanes cycliques et de copolymères de motifs diorganosiloxanes et mono-organosiloxanes.

**6.** Procédé de revêtement, caractérisé en ce que les composés organosiliciés renfermant des groupes oligo-isobutylène ou polyisobutylène selon la revendication 1 ou 2 ou préparés selon la revendication 3, 4 ou 5 sont appliqués sous forme de revêtement.